Europäisches Patentamt

European Patent Office

Office européen des brevets

(19)

(11) Veröffentlichungsnummer: **0 064 601**
**B1**

(12) **EUROPÄISCHE PATENTSCHRIFT**

(45) Veröffentlichungstag der Patentschrift:
05.11.86

(21) Anmeldenummer: 82102899.0

(22) Anmeldetag: 05.04.82

(51) Int. Cl.⁴: **A 61 C 13/26,** A 61 C 13/00,
A 61 C 5/10

(54) Verfahren zur Herstellung von Zahnersatzteilen.

(30) Priorität: 13.05.81 DE 3118890

(43) Veröffentlichungstag der Anmeldung:
17.11.82 Patentblatt 82/46

(45) Bekanntmachung des Hinweises auf die Patenterteilung:
05.11.86 Patentblatt 86/45

(84) Benannte Vertragsstaaten:
AT CH DE FR GB IT LI NL SE

(73) Patentinhaber: Rübeling, Günter, Langener
Landstrasse 173, D-2850 Bremerhaven (DE)
Patentinhaber: Kreylos, Hans-Albert, Polderweg 4,
D-2857 Langen (DE)

(72) Erfinder: Kreylos, Hans-Albert, Polderweg 4,
D-2857 Langen (DE)
Erfinder: Zeiser, Manfred P., Dr., Im Wolfsgalgen
8, D-7141 Schwieberdingen (DE)

(56) Entgegenhaltungen:
CH-A-459 461
CH-A-546 066
DE-A-2 616 767
DE-B-1 287 738

"Lehrbuch der Umformtechnik", Hrsg. K. Lange,
Band 3, 1975, Seite 500
ELEKTROTECHNIK, Band 53, Nr. 4 17. Februar 1971
W. MAY "Elektrobearbeitung - Eine zukunftsreiche
Technik" Seiten 20 bis 22

## Beschreibung

Die Erfindung bezieht sich auf ein Verfahren zur Herstellung von Zahnersatzteilen gemäß den Merkmalen des Oberbegriffs des Anspruchs 1.

In der Zahntechnik wird in vielen·Fällen ein Sekundärteil, zum Beispiel eine Außenkrone, über ein Halteelement lösbar an einem Primärteil, beispielsweise einer festsitzenden Innenkrone, befestigt. Häufig werden dazu als Halteelemente sogenannte Riegel oder in anderen Fällen Friktionsstifte verwendet. Bei Verwendung eines Riegels wird das Sekundärteil am Primärteil förmschlüssig, bei Verwendung eines Friktionsstiftes dagegen aufgrund der Reibung kraftschlüssig gehalten. In beiden Fällen kommt es entscheidend darauf an, daß die Aufnahme für das Halte element lagerichtig und genau passend ausgearbeitet wird. Bei Verwendung eines Friktionsstiftes, der meist am Sekundärteil fixiert wird und in eine rillenartige Aufnahme im Primärteil hineinragt, muß eine ausreichende Reibung zwischen Stift und Aufnahme gewährleistet sein, damit des Sekundärteil nicht unbeabsichtigt vom Primärteil abhebt. Dagegen soll ein Drehriegel verhältnismäßig leichtgängig aber natürlich spielfrei in der lagerartigen Aufnahme drehbar sein. Insbesondere bei einem Dreh- oder Schubriegel ist darüberhinaus wichtig, daß die einander zugeordneten Aufnahmen bzw. Lager im Sekundärteil und im Primärteil genau miteinander fluchten. Auch bei Verwendung von Friktionsstiften ist dies wichtig, wenn diese Friktionsstifte in einer Aufnahme bzw. Bohrung im Sekundärteil festgelegt sind und die Ausrichtung der Stifte durch diese Bohrung bestimmt ist. Insgesamt ist also festzustellen, daß die qualität derartiger zahntechnischer Arbeiten entscheidend von der Form- und Passgenauigkeit der Aufnahmen bzw. Rillen, Lager der Bohrungen für die Halteelemente abhängt.

Aus der CH-A-459 461 ist eine Ausführung der eingangs erwähnten Art bekannt, bei der ein erstes Geschiebeteil (Patrize) mit einer Krone (Primärteil) und ein zweites Geschiebeteil (Matrize) mit dem Teilzahnersatz (Sekundärteil) verbunden, nämlich in diesen eingelassen ist. Patrize und Matrize und folglich im fertigen Zustand auch Primär- und Sekundärteil sind über wenigstens ein Halteelement in Form eines Stiftes lösbar miteinander verbunden, wobei jedes Halteelement jeweils in einer Aufnahme der Patrize und Matrize steckt.

Bei dieser bekannten Ausführung werden Patrize und Matrize aus einer Edelmetallegierung zunächst als Einzelteil hergestellt. Dabei werden zur Erstellung präziser, koaxial ausgerichteter Aufnahmen Matrize und Patrize lagerichtig übereinander gestülpt und dann bei derart vereinigten Geschiebeteilen die Aufnahmen gemeinsam in einem Arbeitsvorgang in Patrize und Matrize eingearbeitet. Die derart konfektionierten, also nicht für jedes Zahnersatzteil individuell angefertigten Geschiebeteile werden anschließend mit der Krone bzw. dem Teilzahnersatz verbunden.

Bei diesem bekannten Herstellungsverfahren wird zwar ein guter Passitz der Halteelemente in den Aufnahmen gewährleistet, doch ist dieses Herstellungsverfahren zeitraubend und kostspielig, weil zunächst die Geschiebeteile als seperate Teile angefertigt oder zugekauft werden müssen. Außerdem ist dieses Verfahren nicht universell einsetzbar, weil nicht immer ausreichend Platz für derartige Geschiebeteile vorhanden ist.

Bei anderen bekannten Verfahren wird die Aufnahme für das Halteelement in der Innenkrone gefräst bzw. gebohrt, während das Lager für einen als Halteelement·eingesetzten Riegel im Sekundärteil beim Gießen der Außenkrone geformt wird. Aufgrund unvermeidlicher Toleranzen kann dabei nicht sichergestellt werden, daß die Lager bzw. Aufnahmen später genau miteinander fluchten. In den meisten Fällen ist daher eine zeitraubende Nacharbeit, beispielsweise auch ein Aufbohren des einen oder anderen Lagers erforderlich, damit einerseits der gewünschte Sitz der Außenkrone auf der Innenkrone erreicht wird und andererseits der Riegel ohne großen Kraftaufwand in den Lagern gedreht oder verschoben werden kann. Ein ähnliches Verfahren zeigt auch die CH-A-546 066.

Ähnliche Verfahren werden auch bei Brücken, partiellen Prothesen oder Vollprothesen angewendet, wenn das Sekundärteil beispielsweise an einem Steg zwischen zwei Innenkronen verankert werden soll. Auch hierbei werden die Lager im Steg oder einem Ansatz des primären Stützgerüstes gebohrt bzw. gefräst, während die Lager, meist Bohrungen im Sekundärteil durch entsprechende Platzhalter beim Gießen geformt werden.

Derartige Verfahren sind nur anwendbar, wenn man Edelmetalllegierungen als Werkstoff für die Innen- und Außenkronen bzw. das Primärteil und Sekundärteil verwendet. Bei Verwendung von edelmetallfreien Legierungen kann ein solches Verfahren bisher nicht durchgeführt werden, weil wegen der größeren Härte etwa einer Cr-Ni-Legierung ein Bohren herkömmlicher Art praktisch nicht möglich ist. Wegen der wesentlich höheren Verarbeitungstemperatur der edelmetallfreien Legierungen kann die Aufnahme für das Halteelement aber auch nicht so ohne weiteres beim Gießen geformt werden, weil die üblichen Platzhalter für derartige Temperaturen nicht ausgelegt sind. Auch ein Anlöten handelsüblicher Verbindungselemente ist bei edelmetallfreien Legierungen nicht möglich, denn dadurch wird die Haftung keramischer Verblendungen beeinträchtigt. Schließlich ist zu berücksichtigen, daß es während des Gußvorganges edelmetallfreier Legierungen zu einer Reaktion zwischen dem einschießenden flüssigen Metall und der Einbettmasse kommt, was zu einer Bildung einer dünnen Schicht auf der Metalloberfläche führt. Die Dicke dieser Schicht hängt von verschiedenen Faktoren ab und läßt sich nicht vorherbestimmen. Man kann daher kleine Schwankungen in der Größe des Gußobjektes nicht vermeiden, was zur Folge hat, daß bei teleskopierenden Elementen mit einem Außenteil aus einer edelmetallfreien Legierung eine ausreichende Friktion nicht gewährleietet werden kann. Zusammenfassend kann also gesagt werden, daß Zahnersatzteile der fraglichen Art aus edelmetallfreien Legierungen bisher nicht hergestellt werden konnten, obwohl wegen der in letzter Zeit beträchtlich gestiegenen Kosten der Edelmetalle ein erheblicher Bedarf an derartigen Zahnersatzteilen besteht.

Der vorliegenden Erfindung liegt daher die Aufgabe zugrunde ein Verfahren zur Herstellung derartiger Zahnersatzteile zu schaffen, welches universell, also bei Verwendung von Legierungen mit oder ohne Edelmetallen einsetzbar ist, einen geringen Zeitaufwand erfordert und damit kostengünstig ist, aber trotzdem den gewünschten Sitz des Sekundärteiles auf dem Primärteil sowie eine den Erfordernissen entsprechende Passung zwischen Aufnahme und Halteelement gewährleistet.

Diese Aufgabe wird erfindungsgemäß mit den kennzeichnenden Merkmalen des Anspruchs 1 gelöst.

Die vorliegende Erfindung beruht wesentlich auf dem Gedanken, daß bei Einsatz des schonenden und ohne Druck auf das zu bearbeitende Teil durchgeführten Funkenerosionsverfahrens die Aufnahmen unmittelbar in das individuell angefertigte Primärteil und in das vollständig ausgearbeitete Sekundärteil eingearbeitet werden kann, ohne daß dabei die Form dieser Teile beeinträchtigt wird oder die Verblendung auf dem Sekundärteil unbeabsichtigt beschädigt wird. Die vorliegende Erfindung unterscheidet sich von dem Stand der Technik nach der CH-A-459 461 durch die zeitliche Reihenfolge der einzelnen Verfahrensschritte. Während bei der bekannten Ausführung zunächst die Aufnahmen (in zusätzlichen Teilen) gebildet werden und erst anschließend das Sekundärteil vollständig ausgebildet und verblendet wird, werden bei dem Verfahren nach der vorliegenden Erfindung Sekundärteil und ggf. auch das Primärteil zunächst vollständig ausgearbeitet und danach erst die Aufnahmen in einem Arbeitsgang und damit sehr präzise unmittelbar in diese Teile eingearbeitet, Außerdem unterscheidet sich die Erfindung vom Stand der Technik durch die Art des Herstellungsverfahrens für die Aufnahmen. Bei der Ausführung nach der CH-A-459 461 werden die Aufnahmen offenbar in herkömmlicher Weise gebohrt, wohingegen nach der vorliegenden Erfindung das Funkenerosionsverfahren eingesetzt werden soll.

Das Funkenerosionsverfahren und die damit verbundenen Vorteile sind seit Jahrzehnten allgemein bekannt. Auch im ßereich der Zahntechnik, nämlich zur Herstellung eines Mehrfach-Bukkal-Röhrchens ist dieses Verfahren bereits eingesetzt worden, wie die DE-A-2 616-767 zeigt. Dabei handelt es sich aber um die fabrikmäßige Großserienherstellung von Teilen, die später als Fertigteil in einem zahntechnischen Labor verarbeitet werden. Nach der vorliegenden Erfindung soll dagegen das Funkenerosionsverfahren nun aber unmittelbar am Zahnersatzteil eingesetzt werden.

Das Funkenerosionsverfahren bietet eine Reihe gravierender Vorteile. Der Querschnitt der Aufnahme ist durch entsprechende Formgebung der Elektrode frei wählbar und kann damit auch unterschiedlichsten handelsüblichen Riegeln genau angepaßt werden. Da die Aufnahmen in einem Arbeitsgang in das über das Primärteil gestülpte Sekundärteil und in das Primärteil eingearbeitet werden, wird mit Sicherheit eine absolut fluchtende Ausrichtung der beiden Aufnahmen erreicht, so daß in beiden Teilen eine exakte und leichtgängige Führung eines Riegels gewährleistet ist. Eine Nacharbeit der einen oder anderen Aufnahme entfällt. Ungenauigkeiten beim Abformen des Sekundärteiles bzw. beim Gießen haben keinerlei Auswirkungen auf die Passung des Halteelementes in den Aufnahmen, da diese erst später geschaffen werden. Schließlich kann die Elektrode so gestaltet werden, daß sie grundsätzlich von der lingualen Seite her angesetzt werden kann. Eine Verformung der meist dünnen Seitenwände der bearbeiteten Teile ist nicht zu befürchten, da beim Funkenerosionsverfahren kein Druck auf das Werkstück ausgeübt wird.

Mit dem Funkenerosionsverfahren können ohne Schwierigkeiten Durchbrüche, Bohrungen oder Rillen, die als Aufnahme zur Führung eines Riegels oder Friktionsstiftes dienen, auch in harte metallische Werkstoffe eingearbeitet werden. Mit der vorliegenden Erfindung wird es daher erstmals möglich, Zahnersatzteile auch dann sicher aneinander zu verankern, wenn beide Teile aus einer edelmetallfreien Legierung bestehen. Gegenüber den bisher üblichen Konstruktionen, bei denen wenigstens das Außenteil aus einer Edelmetall-Legierung hergestellt war, erzielt man damit bedeutende Kostenvorteile. Es sei aber an dieser Stelle deutlich darauf hingewiesen, daß das Verfahren nach der Erfindung auch dann mit Vorteil eingesetzt werden kann, wenn man Primär- und Sekundärteil aus Edelmetallen herstellt.

Wenn die Aufnahmen in den verblendeten Bereich des Sekundärteiles eingearbeitet werden sollen, müssen besondere Maßnahmen getroffen werden, damit die Elektrode an dem metallischen Stützgerüst angesetzt werden kann. Bei einem bevorzugten Verfahren wird dazu an das Sekundärteil ein Stutzen oder Ansatz angegossen, der die spätere Verblendung durchdringt und zur Bildung der Aufnahme später wieder aberodiert wird. Diesem Verfahren wird der Vorzug gegeben, weil ein wesentlicher Aufwand damit nicht verbunden ist. Alternativ könnte man das Verblendmaterial an der Lagerstelle beispielsweise mit einem Bohrer abtragen oder den Bereich der Aufnahme vor dem Verblenden abdecken und später dann diese Abdeckung wieder vor dem Ansetzen der Elektrode entfernen. Es handelt sich dabei lediglich um einfache vorbereitende Arbeitsschritte, die die Qualität der Aufnahmen, die danach in einem Arbeitsschritt gebildet werden, nicht beeinträchtigen.

Die Aufnahmen können horizontal oder vertikal oder in jeder anderen Richtung in die Zahnersatzteile eingearbeitet werden. Auch die Stelle der Aufnahme kann beliebig gewählt werden. Beispielsweise können die Aufnahmen unmittelbar in die Wandungen von Kronen oder in Stege eingearbeitet werden, die zwei Kronen miteinander verbinden. Auch in Schubverteilungsarme können derartige Aufnahmen einerodiert werden. Die Aufnahmen können dabei teils als geschlossene Bohrungen, in anderen Abschnitten dagegen als dachrinnenförmige Rillen ausgebildet sein. Das Funkenerosionsverfahren kann mit Vorteil auch dann eingesetzt werden, wenn in die Teile Führungsrillen eingearbeitet werden sollen, die man bei der Herstellung von sogenannten Geschieben benötigt, die individuell angepaßt werden. Ein deratiges Verfahren zur Herstellung von Zahnersatzteilen, deren Primärteil und Sekundärteil Führungsflächen eines Geschiebes aufweisen, wird in der Teilanmeldung EP-A-0 175 054 beansprucht; hierbei können die Aufnahmen für evt. erforderliche Halteelemente nach dem im vorliegenden Patent beanspruchten Verfahren hergestellt werden.

Die Erfindung wird nachstehend anhang der in der Zeichnung dergestellten Ausführungsbeispiele näher erläutert. Die schematischen Zeichnungen sollen nur das Wesentliche zum Ausdruck bringen und, sind nicht in jedem Fell maßstabsgerecht ausgeführt.

Es zeigen:

Fig. 1 einen Schnitt durch eine Primär- und Sekundärkrone quer zum Lager für einen Riegel,

Fig. 2 einen Schnitt längs des Lagers für den Riegel,

Fig. 3 eine Ansicht eines Drehriegels,

Fig. 4 einen Schnitt durch eine Teilprothese, die an einem Steg verankerbar ist,

Fig. 5 einen Schnitt ähnlich Fig. 4 nach der Endmontage,

Fig. 6 eine Ansicht eines Schubriegels und einer Anschlagscheibe,

Fig.7 eine Ansicht eines Primärteiles mit zwei benachbarten Innenkronen,

Fig.8 eine Ansicht auf des zugehörige Sekundärteil,

Fig.9 einen Schnitt entlang der Schnittlinie XI-XI,

Fig.10 einen Schnitt entlang der Schnittlinie XII-XII,

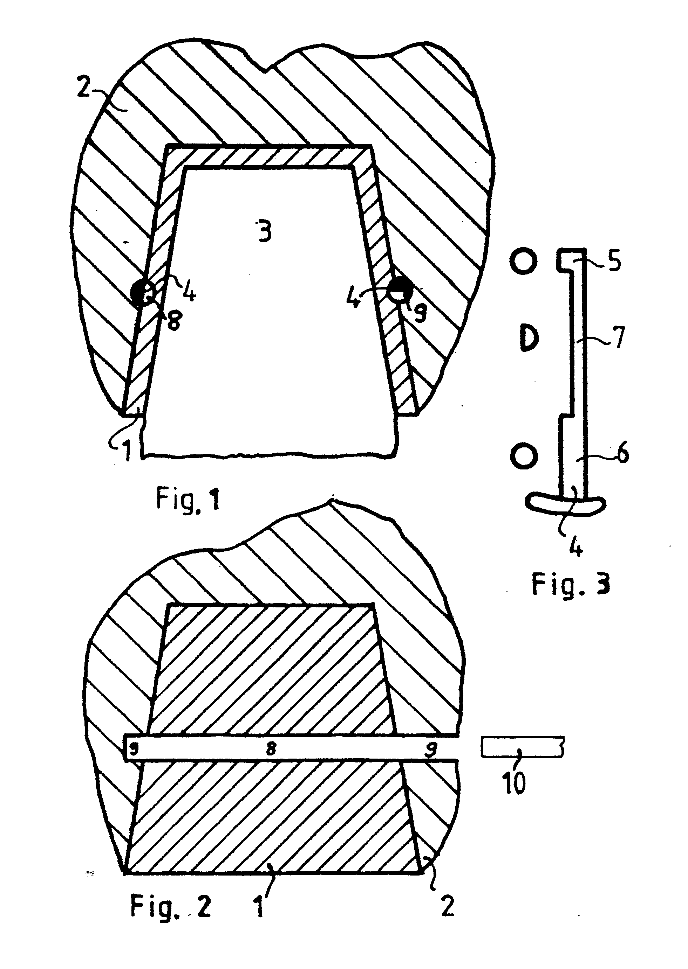

Als Primärteil ist in Fig. 1 eine Innenkrone dargestellt und mit 1 bezeichnet. Auf dieser Innenkrone sitzt passend eine Außenkrone 2 als Sekundärteil. Mit 3 ist der Zahnstumpf eines Gebißmodells bezeichnet, von dem die Innenkrone 1 abgeformt ist. Innen- und Außenkrone sind, über wenigstens einen Drehriegel miteinander verbunden. Wie Fig. 3 zeigt, hat der Drehriegel 4 zwischen zwei Abschnitten 5 und 6 mit kreisrundem Querschnitt einen Bereich 7 mit einem Halbrundquerschnitt. Dieser Drehriegel sitzt passend in einer lagerartigen Aufnahme 8 der Innenkrone bzw. einem Lager 9 der Außenkrone. Wenn der Drehriegel 4 die in Fig. 1 rechts dergestellte Stellung einnimmt, ist die Außen krone mit der Innenkrone verriegelt. Wird der Drehriegel 4 um 90° verschwenkt, wie das in Fig. 1 links dargestellt ist, kann die Außenkrone 2 von der Innenkrone 1 abgehoben werden.

Bei dem Ausführungsbeispiel nach den Fig. 1 bis 3 dienen dachrinnenförmige Rillen als Lager bzw. Aufnahmen für das in Form eines Drehriegels ausgebildete Halteelement. Diese Rillen 8 und 9 müssen sehr exakt miteinander fluchten und nach der Endmontage des Zahnersatzteiles praktisch eine kreisrunde Bohrung bilden, in die der Riegel 4 ohne Spiel, andererseits aber leichtgängig eingeschoben werden kann. Damit dies ohne umständliche Nacharbeit der Lager möglich ist, werden beide Aufnahmen 8 und 9 mittels einer Elektrode 10 in einem Arbeitsgang durch Funkenerosion in das Primär- bzw. Sekundärteil eingearbeitet. Man geht dabei vorteilhafterweise so vor, das zunächst die Innenkrone auf einen Halter - ggf. aufgestülpt auf den Zahnstumpf 3 des Gebißmodells - einer Funkenerosionsmaschine aufgespannt und so ausgerichtet wird, daß eine Hilfselektrode mit halbkreisförmigem Querschnitt die in Fig. 1 links bezüglich des Riegels dargestellte Lage einnimmt, also mit ihrer planen Fläche in der richtigen Höhe seitlich an der Außenwand der Innenkrone 1 anliegt. Ohne die Lage der Innenkrone zu verändern, wird dann die Hilfselektrode durch eine Elektrode 10 mit kreisrundem Querschnitt ersetzt und die Außenkrone 2 in ihrer endhültigen, anatomisch nachgebildeten Form lagerichtig auf die Innenkrone aufgesetzt. Mit dieser Elektrode 10 wird dann in die Baueinheit aus Primär- und Sekundärteil eine kreisrunde Bohrung eingearbeitet, die die linguale Wand der Außenkrone durchdringt und in der gegenüberliegenden Wand als Sackloch endet. Die Aufnahmen sind also in einem ersten Abschnitt als geschlossene Bohrungen und daran anschließend als dachrinnenförmige Rillen ausgebildet.

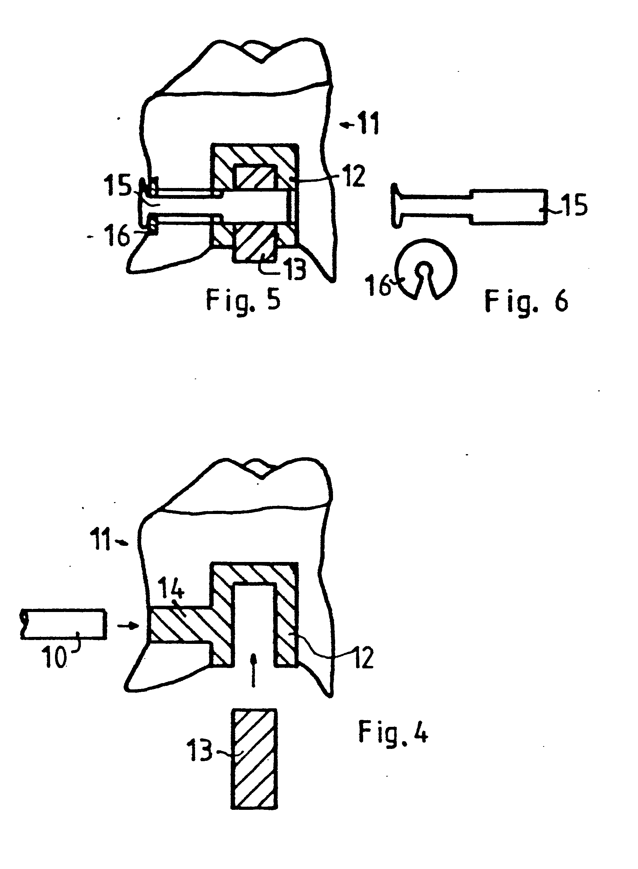

In den Fig. 4 bis 6 ist schematisch ein Ausführungsbeispiel dargestellt, bei dem eine Teilprothese 11 auf einem metallischen Stützgerüst 12 an einem Steg 13 zwischen zwei Primärkronen verankert werden soll. Fig.4 zeigt unten einen massiven Steg 13 oder einen stegartigen Ansatz an einer Primärkrone. Dieser Steg besteht aus einem Nichtedelmetall, beispielsweise einer Ni-Cr-Legierung. An das Stützgerüst 12 ist ein Ansatz 14 angegossen, der - wie die Zeichnung zeigt - die Verblendung durchdringt und an der Oberfläche sichtbar ist. Ohne jede zusätzliche Maßnahme kann damit die Elektrode 10 direkt am Metallteil angesetzt werden, auch wenn die Teilprothese im übrigen eine Kunststoff- bzw. Keramikverblendung trägt. Wiederum wird, das Stützgerüst (Prothesensattel) über den Steg 13 gestülpt und in einem Arbeitsgang durch Funkenerosion eine Bohrung in das Sekundärteil 12 und das Primärteil 13 eingearbeitet.

Im vorliegenden Fall werden die beiden Teile mittels eines Schubriegels miteinander verriegelt. Dieser Schubriegel 15 hat zwei zylindrische Abschnitte unterschiedlichen Durchmessers. Eine Anschlagscheibe 16, die geschlitzt ist und einen Durchbruch entsprechend dem dünneren Abschnitt des Schubriegels 15 aufweist, kann auf den Schubriegel aufgeklipst werden. Diese Baueinheit wird dann in die Bohrung von Primär- und Sekundärteil eingeführt und die Anschlagscheibe 16 in das Verblendmaterial eingeklebt oder ggf. eigebettet. Der seitliche Hub des Schubriegels wird also durch die Anschlagscheibe 16 begrenzt, wie das aus Fig. 5 hervorgeht.

In den bisher beschriebenen Figuren sind Ausführungsbeispiele dargestellt, bei denen Riegel als Halteelemente verwendet werden. Anhand der übrigen Figuren werden nun Konstruktionen mit Friktionsstiften beschrieben.

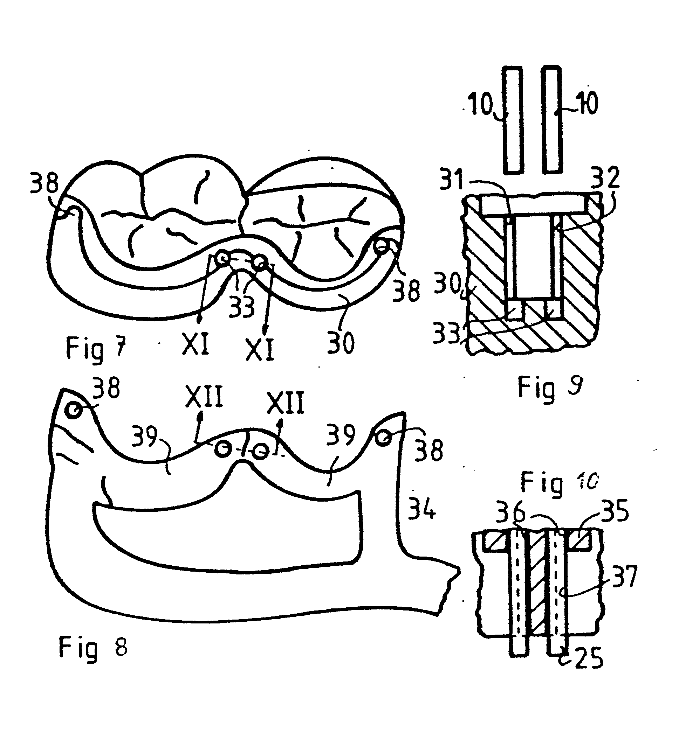

Fig 7 zeigt eine Ansicht eines Primärteiles mit zwei benachbarten Innenkronen an dem das in Fig. 8 nur teilweise dargestellte Sekundärteil verankert werden soll. In Fig. 7 und 9 erkennt man, daß in benachbarte Seitenwände der Innenkronen 30 nebeneinander zwei Rillen 31 und 32 eingearbeitet sind, die beide in Sacklöcher 33 auslaufen. Des Sekundärteil 34 hat in einer Abstützfläche 35 zwei Bohrungen 36, an die sich dachrinnenförmige Rillen 37 anschließen. In diese Bohrungen 36 werden die Stifte 25 eingesteckt und verlötet. Die Stifte 25 sind über den größten Teil ihrer Länge in den Rillen geführt und ragen nach unten über die Abstützfläche hinaus. Diese herausragenden Abschnitte stecken nach der Endmontage in den Sacklöchern 33 im Primärteil. Bei dem Ausführungsbeispiel nach den Fig.7 bis 10 sind also Aufnahmen für Halteelemente in der Übergangszone zwischen zwei benachbarten Innenkronen angeordnet. Ergänzend kann man Aufnahmen 38 auch am Ende der Schubverteilungsarme 39 vorsehen. Bei dem Zahnersatzteil nach den Fig. 7 bis 10 ist das Sekundärteil also an vier Stellen am Primärteil verankert.

In den Zeichnungen sind Ausführungsbeispiele dargestellt, bei denen die Aufnahmen entweder als kreisrunde Bohrungen oder als dachrinnenförmige Rillen ausgebildet sind. Davon abweichend können natürlich auch Durchbrüche oder Ausnehmungen mit anderem Querschnitt ohne Schwierigkeiten in die miteinender zu verankernden Teile im Funkenerosionsverfahren eingearbeitet werden.

Denkbar sind beispielsweise auch ovale oder konische Bohrungen, die handelsüblichen Verbindungs- bzw. Halteelementen angepaßt sind. Das erfindungsgemäße Verfahren kann auch dann mit Vorteil angewendet werden, wenn anstelle der gezeigten horizontal gerichteten Riegel vertikal geführte Riegel oder anstelle vertikaler Friktionsstifte horizontale Stifte verwendet werden sollen. Natürlich kann man das Verfahren auch bei Verwendung anderer Halteelemente, etwa bei Klammerkonstruktionen verwenden.

Aufgrund des erfindungsgemäßen Verfahrens können die Primärteile und die Sekundärteile vollständig ausgearbeitet werden, bevor man die Aufnahmen, Lager oder Durchbrüche für die Halteelemente einarbeitet. Dadurch wird eine wesentliche Zeitersparnis erreicht und somit ein beträchtlicher Kostenvorteil schon dann erzielt, wenn man in herkömmlicher Weise mit Edelmetallen arbeitet. Der weitaus größere Vorteil hinsichtlich der Kosten wird aber dadurch erreicht, daß es mit dem erfindungsgemäßen Verfahren erstmals möglich wird, ohne großen Aufwand ein Sekundärteil aus einer edelmetallfreien Legierung betriebssicher an einem ebenfalls edelmetellfreien Primärteil zu verankern.

**Patentansprüche**

1. Verfahren zur Herstellung von Zahnersatzteilen, wie Kronen, Brücken, Teil- oder Vollprothesen etc., mit einem festsitzenden metallischen Primärteil (1; 13; 30) und einem daran über wenigstens ein Halteelement (4; 15; 25) lösbar befestigten, ebenfalls aus Metall gefertigten Sekundärteil (2; 11, 12; 34), wobei Primärteil (1; 13; 30) und Sekundärteil (2; 11, 12; 34) je eine Aufnahme (8, 9; 31, 32, 33, 36, 37; 38) für das Halteelement (4; 15; 25) aufweisen und die Aufnahmen, gemeinsam in einem Arbeitsgang geschaffen sind, dadurch gekennzeichnet, daß zunächst das Sekundärteil (2; 11, 12; 34) einschließlich einer evt. vorhandenen Verblendung vollständig ausgearbeitet wird, daß das vollständig ausgearbeitete Sekundärteil (2; 11, 12; 34) dann lagerichtig über das Primärteil (1; 13; 30) gestülpt wird und daß erst anschließend die Aufnahmen (8, 9; 31, 32, 33, 36, 37; 38) für das Halteelement (4; 15; 25) durch Funkenerosion in das Sekundärteil (2; 11, 12; 34) und das Primärteil (1; 13; 30) eingearbeitet werden.

2. Verfahren nach Anspruch 1, dadurch gekennzeichnet, daß bei einem im Bereich der Aufnahme verblendeten Sekundärteil (11, 12) ein Stutzen oder Ansatz (14) an das Sekundärteil (11, 12) angegossen wird, der die Verblendung durchdringt und das Ansetzen einer Elektrode (10) ermöglicht.

3. Verfahren nach Anspruch 1, dadurch gekennzeichnet, daß bei einem im Bereich der Aufnahme verblendeten Sekundärteil in das Verblendmaterial eine bis zum metallischen Stützgerüst reichende Aussparung beispielsweise mittels eines Bohrers eingearbeitet wird und durch diese Aussparung später eine Elektrode angesetzt wird.

4. Verfahren nach Anspruch 1, dadurch gekennzeichnet, daß vor dem Verblenden das Sekundärteil im Bereich der späteren Aufnahme abgedeckt wird und diese Abdeckung vor dem Ansetzen der Elektrode abgetragen wird.

5. Verfahren nach wenigstens einem der Ansprüche 1 bis 4, dadurch gekennzeichnet, daß sowohl das Primärteil (1; 13; 30) als auch das Sekundärteil (2; 11, 12; 34) aus einer edelmetallfreien Legierung oder einer Edelmetall-Legierung gefertigt sind.

6. Verfahren nach wenigstens einem der vorhergehenden Ansprüche, dadurch gekennzeichnet, daß insbesondere die Aufnahmen (8,9) für Halteelemente in Form von Riegeln (4;15) horizontal in das Primärteil (1; 13) und das Sekundärteil (2; 11, 12) erodiert werden.

7. Verfahren nach wenigstens einem der Ansprüche 1 bis 5, dadurch gekennzeichnet, daß insbesondere die Aufnahmen (31, 32, 33, 36, 37; 38) für Halteelemente in Form von Friktionsstiften (25) vertikal in das Primärteil (30) und das Sekundärteil (34) erodiert werden.

8. Verfahren nach Anspruch 7, dadurch gekennzeichnet, daß eine Aufnahme für einen Friktionsstift vertikal in einen zwei Innenkronen verbindenden Steg erodiert wird.

9. Verfahren nach Anspruch 7, dadurch gekennzeichnet, daß eine Aufnahme (31, 32, 33) für einen Friktionsstift (25) in die Mantelfläche einer Innenkrone (30), insbesondere an der Übergangszone zwischen zwei benachbarten Innenkronen, vertikal erodiert wird.

10. Verfahren nach Anspruch 7, dadurch gekennzeichnet, daß eine Aufnahme (38) für einen Friktionsstift (25) in einen Schubverteilungsarm (39) eines Sekundärteils (34) ergdiert wird.

11. Verfahren nach wenigstens einem der vorhergehenden Ansprüche, dadurch gekennzeichnet, daß die Aufnahmen teils als geschlossene Bohrungen (33, 36; 38), teils als dachrinnenförmige Rillen (31, 32, 37) ausgebildet sind.

12. Verfahren nach wenigstens einem der Ansprüche 1 bis 10, dadurch gekennzeichnet, daß in das Primärteil (1) und in das Sekundärteil (2) je eine dachrinnenförmige Rille (8,9) eingearbeitet werden, die miteinander fluchten und zusammen die Aufnahme für das Halteelement (4) bilden.

13.Verfahren nach wenigstens einem der vorhergehenden Ansprüche, dadurch gekennzeichnet, daß ein Friktionsstift (25) in einer geschlossenen Bohrung (36) im Sekundärteil (34) fixiert, beispielsweise verlötet, wird.

## Claims

1. A method of making tooth replacement parts, such as crowns, bridges, partial or full prostheses etc., comprising a fixed metal primary part (1; 13; 30) and a secondary part (2; 11, 12; 34), which is also made of metal and which is releasably secured to the primary part by means of at least one retaining element (4; 15; 25), the primary part (1; 13; 30) and the secondary part (2; 11, 12; 34) each having receiving means (8, 9; 31, 32, 33, 36, 37; 38) for the retaining element (4; 15; 25) and the receiving means are made in one operation, characterised in that the secondary part (2; 11, 12; 34) together with any masking provided is first completely formed, the completely formed secondary part (2; 11, 12; 34) is then inverted in the correct position over the primary part (1; 13; 30) and only then are the receiving means (8, 9; 31, 32, 33, 36, 37; 38) for the retaining element (4; 15; 25) formed in the secondary part (2; 11, 12; 34) and the primary part (1; 13; 30) by spark erosion.

2. A method according to claim 1, characterised in that when the secondary part (11, 12) is masked in the area of the receiving means there is cast on the secondary part (11, 12) a connection or projection (14) which penetrates the masking and enables an electrode (10) to be applied.

3. A method according to claim 1, characterised. in that when the secondary part is masked in the area of the receiving means an opening is formed, e.g. by means of a drill, in the masking material and extends as far as the metal supporting structure, and an electrode is subsequently applied through said opening.

4. A method according to claim 1, characterised in that prior to masking the secondary part is covered in the area of the subsequent receiving means and said cover is removed before the electrode is applied.

5. A method according to at least one of claim 1 to 4, characterised in that both the primary part (1; 13; 30) and the secondary part (2; 11, 12; 34) are made from an alloy which is devoid of precious metal or from a precious metal alloy.

6. A method according to at least one of the preceding claims, characterised in that the receiving means (8, 9) for retaining elements in the form of bars (4; 15) in particular are formed horizontally in the primary part (1; 13) and the secondary part (2; 11, 12) by erosion.

7. A method according to at least one of claims 1 to 5, characterised in that the receiving means (31, 32, 33, 36, 37; 38) for retaining elements in the form of friction pins (25) in particular are formed vertically in the primary part (30) and the secondary part (34) by erosion.

8. A method according to claim 7, characterised in that a receiving means for a friction pin is formed vertically by erosion in a web connecting two inner crowns.

9. A method according to claim 7, characterised in that a receiving means (31, 32, 33) for a friction pin (25) is vertically formed by erosion in the outer surface of an inner crown (30), more particularly at the transition zone between two adjacent inner crowns.

10. A method according to claim 7, characterised in that a receiving means (38) for a friction pin (25) is formed by erosion in a shear distributing arm (39) of a secondary part (34).

11. A method according to at least one of the preceding claims, characterised in that the receiving means are formed partly as closed bores (33, 36; 38) and partly as gutter-shaped channels (31, 32, 37).

12. Method according to at least one of the claims 1 to 10, characterised in that a gutter-shaped channel (8, 9) is formed in each of the primary (1) and secondary (2) parts, which channels are aligned with one another and together form the receiver for the holding element (4).

13. Method according to at least one of the preceding claims, characterised in that a friction peg (25) is fixed, for example welded, in a closed bore (36) in the secondary part (34).


**Revendications**

1. Procédé de fabrication d'éléments de prothèse dentaire, tels que couronnes, bridges, prothèses partielles ou complètes etc...., comportant une pièce primaire métallique, fixe (1; 13; 30) et une pièce secondaire (2; 11, 12; 34), fabriquée également en métal, fixée de façon amovible sur la précédente par l'intermédiaire d'au moins un élément de retenue (4; 15; 25), la pièce primaire (1; 13; 30) et la pièce secondaire (2; 11; 12; 34) comportant chacune un logement (8, 9; 31, 33,36, 37; 38) pour l'élément de retenue (4; 15; 25) et les logements étant obtenus simultanément en une seule opération d'usinage, caractérisé par le fait que, tout d'abord, on façonne entièrement la pièce secondaire (2; 11, 12; 34) y compris un revêtement prévu éventuellement, on coiffe alors, en position stable, la pièce primaire (1; 13; 30) de la pièce secondaire entièrement façonnée (2; 11, 12; 34) et ce n'est qu'ensuite que l'on forme dans la pièce secondaire (2; 11, 12; 34) et la pièce primaire (1; 13; 30), par électro-érosion, les logements (8, 9; 31, 32, 33, 36, 37; 38) de l'élément de retenue (4; 15; 25).

2. Procédé selon la revendication 1, caractérisé par le fait que, pour une pièce secondaire (11, 12) pourvue d'un revêtement dans la zone du logement, on coule sur la pièce secondaire (11, 12) un raccord ou rallonge (14), qui traverse le revêtement et permet la mise en place d'une électrode (10).

3. Procédé selon la revendication 1, caractérisé par le fait que, pour une pièce secondaire pourvue d'un revêtement dans la zone du logement, on forme dans la matière de revêtement, par exemple au moyen d'un foret, un évidement s'étendant jusqu'à la charpente de support et, par cet évidement, on met en place ultérieurement une électrode.

4. Procédé selon la revendication 1, caractérisé par le fait qu'avant le revêtement, on recouvre la pièce secondaire dans la zone du logement futur et on supprime ce recouvrement avant la mise en place de l'électrode.

5. Procédé selon l'une au moins des revendications 1 à 4, caractérisé par le fait qu'aussi bien la pièce primaire (1; 13; 30) que la pièce secondaire (2; 11, 12; 34) est fabriquée en alliage comportant ou non un métal précieux.

6. Procédé selon l'une au moins des revendications précédentes, caractérisé par le fait qu'en particulier les logements (8, 9) pour éléments de retenue en forme de verrous (4; 15) sont érodés horizontalement dans la pièce primaire (1; 13) et la pièce secondaire (2; 11, 12).

7. Procédé selon l'une au moins des revendications 1 à 5, caractérisé par le fait qu'en particulier les logements (31, 32, 33, 36, 37; 38) pour éléments de retenue en forme de broche de friction (25) sont érodés verticalement dans la pièce primaire (30) et la pièce secondaire (34).

8. Procédé selon la revendication 7, caractérisé par le fait qu'un logement pour une broche de friction est érodée verticalement dans une barrette reliant deux couronnes internes.

9. Procédé selon la revendication 7, caractérisé par le fait qu'un logement (31,32,33) pour une broche de friction (25) est érodée verticalement dans la surface enveloppe d'une couronne intérieure (30), en particulier sur la zone de transition entre deux couronnes intérieures voisines.

10. Procédé selon la revendication 7, caractérisé par le fait qu'un logement (38) pour une broche de friction (25) est érodée dans un bras de répartition de cisaillement (39) d'une pièce secondaire (34).

11. Procédé selon l'une au moins des revendications précédentes, caractérisé par le fait que les logements sont partiellement des forages fermés (33, 36; 38), partiellement des rainures en forme de gouttière.

12. Procédé selon l'une au moins des revendications 1 à 10, caractérisé par le fait que dans la pièce primaire (1) et dans la pièce secondaire (2) est formée respectivement une rainure en forme de gouttière (8,9) qui sont alignées et forment conjointement les logements pour l'élément de retenue (4).

13. Procédé selon l'une au moins des revendications précédentes, caractérisé par le fait qu'une broche de friction (25) est fixée, par exemple par soudure, dans un forage fermé (36) de la pièce secondaire (34).

Fig. 1

Fig. 3

Fig. 2

Fig. 5

Fig. 6

Fig. 4

Fig 7

38

XI  XI

33  30

Fig 8

38

XII  XII

39  39

38

34

Fig 9

10  10

31  32

30  30

33

Fig 10

36  35

37

25